# EUROPEAN PATENT APPLICATION

(11) **EP 4 583 247 A1**
(43) Date of publication of application: **09.07.2025**
(21) Application number: 24223479.7
(22) Date of filing: 27.12.2024
(51) Int. Cl.: H01M 10/54, H01M 10/052, B01J 49/50, B01J 47/02, H01M 4/525, C01D 15/02, C22B 3/42, C22B 7/00, C22B 21/00, C22B 21/02, C22B 23/00, C22B 26/12, C22B 3/02, C22B 3/24, B01J 20/26

(54) **METHOD AND SYSTEM FOR RECYCLING METAL OF LITHIUM SECONDARY BATTERY**

(30) Priority: 02.01.2024 KR 20240000368
(71) Applicant: SK Innovation Co., Ltd., Seoul 03188 (KR)
(72) Inventor: CHOI, Hwa Jin, 34124 Daejeon (KR); SEO, Young Bin, 34124 Daejeon (KR)
(74) Representative: Thoma, Michael

(57) **Abstract**

A method and a system for recycling a metal from a lithium secondary battery are provided. In the method for recycling a metal from a lithium secondary battery, a cathode active material mixture containing lithium is prepared. A lithium precursor is produced by reducing the cathode active material mixture. A lithium precursor aqueous solution is formed by dissolving the lithium precursor in water. The lithium precursor aqueous solution is passed through an aluminum adsorption resin column to adsorb aluminum to the aluminum adsorption resin column. A first treatment liquid including distilled water is injected into the aluminum adsorption resin column at a flow rate of 100 L/hr to 1,200 L/hr to obtain a regenerated aluminum adsorption resin column from which aluminum is desorbed.

## Description

### BACKGROUND

### 1. Field of the Invention

The embodiments of the present disclosure generally relate to a method and a system for recycling a metal from a lithium secondary battery, and more specifically, to a method and a system for recycling a metal from a lithium secondary battery using an aluminum adsorption resin.

### 2. Description of the Related Art

Recently, a secondary battery has been widely applied and developed as a power source for portable electronic communication devices such as a camcorder, a mobile phone, and a laptop computer, and vehicles such as a hybrid car and an electric car as a power source thereof As the secondary battery, a lithium secondary battery has a high operating voltage and a high energy density per unit weight, and is advantageous in terms of a charging speed and light weight, such that development thereof has proceeded in this regard.

As the demand for the secondary batteries increases, the number of waste batteries increases, and research on methods for recycling the waste batteries is increasing in consideration of environmental protection issues, price competitiveness and the like. For example, as the cost issues caused by the use of expensive valuable metals (e.g., nickel, cobalt, manganese, etc.) and environmental protection issues are emerging due to waste water generated during the treatment or in a process of the waste disposal of batteries, recycling of the waste batteries is required.

In the process of recycling lithium from the waste batteries, removal of impurities (e.g., aluminum, sulfate salt etc.) is required. To remove the impurities, an ion exchange resin may be used. For example, metal impurities in the form of metal ions may be removed through a metal adsorption resin.

However, the ion exchange resin requires regeneration for repeated use, and due to the use of substances (e.g., acids, bases, regenerative chemical substances, etc.) used in the regeneration process of the ion exchange resin, treatment costs may increase and the treatment process may be complicated. In addition, various environmental issues may arise due to the substances generated during the regeneration process of the ion exchange resin. Therefore, a method capable of more efficiently recycling metals from a lithium secondary battery while efficiently regenerating the ion exchange resin is required.

### SUMMARY

An embodiment of the present disclosure provides an efficient method for recycling a metal from a lithium secondary battery.

Another embodiment of the present disclosure provides an efficient system for recycling a metal from a lithium secondary battery.

According to embodiments of the present disclosure, there is provided a method for recycling a metal from a lithium secondary battery. According to the method, a cathode active material mixture containing lithium is prepared. A lithium precursor is produced by reducing the cathode active material mixture. A lithium precursor aqueous solution is formed by dissolving the lithium precursor in water. The lithium precursor aqueous solution passes through an aluminum adsorption resin column to adsorb aluminum to the aluminum adsorption resin column. A first treatment liquid including distilled water into the aluminum adsorption resin column is injected at a flow rate of 100 L/hr to 1,200 L/hr to obtain a regenerated aluminum adsorption resin column from which aluminum is desorbed.

According to some embodiments, the regenerated aluminum adsorption resin column may be reused in the operation of adsorbing aluminum.

According to some embodiments, in the operation of obtaining a regenerated aluminum adsorption resin column, a second treatment liquid including aluminum desorbed from the first treatment liquid is produced.

According to some embodiments, a content of aluminum included in the second treatment liquid may be 200 ppm or more.

According to some embodiments, the method may further include producing a third treatment liquid formed by evaporating the second treatment liquid; and recycling the third treatment liquid as the first treatment liquid.

According to some embodiments, the operation of producing a third treatment liquid may include removing a predetermined distilled water fraction from the second treatment liquid together with the desorbed aluminum.

According to some embodiments, an amount of the distilled water fraction may be 0.01 wt% to 5 wt% based on a total weight of the distilled water included in the second treatment liquid.

According to some embodiments, the first treatment liquid may be injected at a flow rate of 1,000 L/hr to 1,200 L/hr.

According to some embodiments, the first treatment liquid may be injected at a linear speed of 8 m/hr to 13 m/hr.

According to some embodiments, the aluminum adsorption resin column may include a resin including an amine group and a hydroxyl group.

According to some embodiments, the resin including an amine group and a hydroxyl group may include a methylglucosylamine group.

According to another embodiment of the present disclosure, there is provided a system for recycling a metal from a lithium secondary battery, the system including an aluminum adsorption resin column; a flow rate control unit configured to supply distilled water to the aluminum adsorption resin column; an evaporation treatment unit configured to evaporate the distilled water passing through the aluminum adsorption resin column to produce water vapor; a distilled water regeneration unit configured to collect the distilled water from the water vapor generated from the evaporation treatment unit; and a distilled water supply unit configured to supply the distilled water regenerated from the distilled water regeneration unit to the flow rate control unit.

According to some embodiments, the evaporation treatment unit may include a discharge unit from which an untreated distilled water fraction into water vapor and aluminum are discharged.

In accordance with the method for recycling a metal from a lithium secondary battery according to the embodiments of the present disclosure, a wastewater treatment process which is inevitably necessary due to the use of acids or bases may not be required. Therefore, metals may be recycled in an eco-friendly manner while reducing the energy and costs used for recycling metals from the lithium secondary battery.

According to some embodiments, aluminum may be efficiently desorbed while maintaining an ion exchange capacity of an aluminum adsorption resin column through distilled water injected at a flow rate in a predetermined range. Therefore, metals may be continuously recycled from the lithium secondary battery.

According to some embodiments, since additional materials or processes are not required for recycling the treatment liquid in which aluminum is desorbed from the aluminum adsorption resin column, metals may be efficiently recycled from the lithium secondary battery in an eco-friendly manner.

### BRIEF DESCRIPTION OF THE DRAWINGS

The above and other objects, features and other advantages of the embodiments of the present disclosure will be more clearly understood from the following detailed description taken in conjunction with the accompanying drawings, in which:
FIG. 1 is a flowchart of a method for recycling a metal from a lithium secondary battery according to some embodiments of the present disclosure, and
FIGS. 2 and 3 are schematic views for describing a system for recycling a metal from a lithium secondary battery according to some embodiments of the present disclosure.

### DETAILED DESCRIPTION

The embodiments of the present disclosure provide a method for recycling a metal from a lithium secondary battery, which includes adsorption and desorption of aluminum using an aluminum adsorption resin column. In addition, a system for recycling a metal from a lithium secondary battery using an aluminum adsorption resin column is provided.

Hereinafter, embodiments of the present disclosure will be described in detail with reference to the accompanying drawings.

As used herein, the term "precursor" is used to comprehensively refer to a compound including specific metals to provide the specific metals included in the electrode active material.

As used herein, the terms "first," "second," "third," and the like are used to distinguish each material, and do not distinguish the importance, order, etc. of each material.

As used herein, the "treatment liquid" is used as a term to refer to a material, and does not limit the phase of each material. For example, the treatment liquid may include a solid state, a liquid state, and/or a gaseous state.

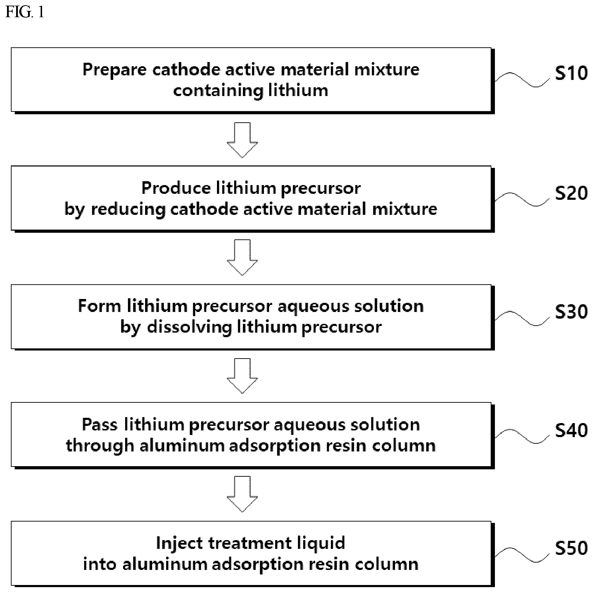

FIG. 1 is a flowchart of a method for recycling a metal from a lithium secondary battery according to some embodiments of the present disclosure.

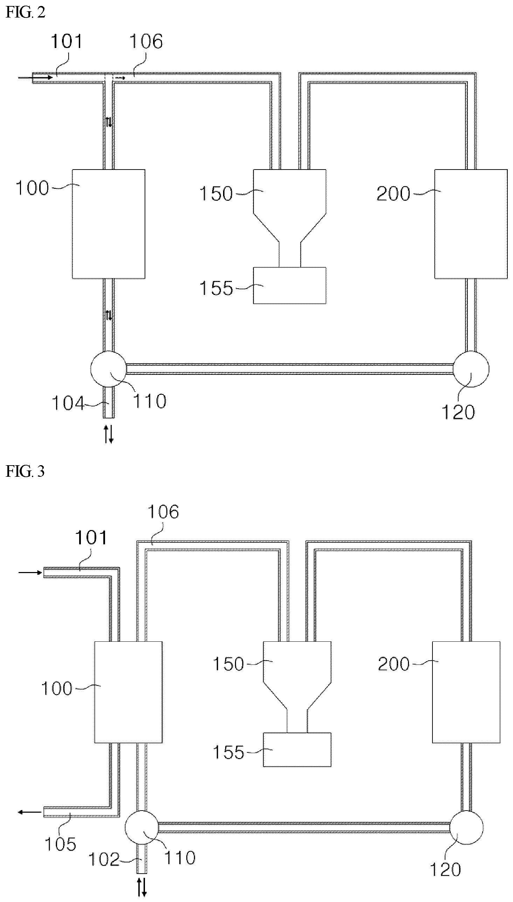

FIGS. 2 and 3 are simplified schematic views of a system for recycling a metal from a lithium secondary battery according to some embodiments of the present disclosure.

Referring to FIG. 1, a cathode active material mixture containing lithium is prepared according to operation S10.

The cathode active material mixture containing lithium may be collected from a cathode of a lithium secondary battery. The lithium secondary battery may include an electrode assembly including a cathode, an anode and a separation membrane. The cathode may include a cathode current collector, a cathode active material layer coated on the cathode current collector, and the anode may include an anode current collector, and an anode active material layer coated on the anode current collector.

According to some embodiments, the cathode active material mixture may include an oxide containing lithium and a transition metal.

For example, the cathode active material mixture may include a lithium-nickel metal oxide. The lithium-nickel metal oxide may further include at least one of cobalt (Co), manganese (Mn) and aluminum (Al).

In some embodiments, the lithium-nickel metal oxide may include a layered structure or a crystal structure represented by Formula 1 below:

Formula 1 LiₓNiₐM_{b}O_{2+z}

In Formula 1, x, a, b and z may be in a range of 0.9≤x≤12, 0.6≤a≤0.99, 0.01≤b≤0.4, - 0.5≤z≤0.1, respectively. As described above, M may include Co, Mn, and/or Al.

The chemical structure represented by Formula 1 indicates a bonding relationship between elements included in the layered structure or crystal structure of the cathode active material, and does not exclude other additional elements. For example, M includes Co and/or Mn, and Co and Mn may be provided as main active elements of the cathode active material together with Ni. Here, it should be understood that Formula 1 is provided to express the bonding relationship between the main active elements, and is a formula encompassing introduction and substitution of the additional elements.

In some embodiments, the main active element may further include an auxiliary element. The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr.

According to some embodiments, the cathode active material mixture may be obtained from a cathode of a waste lithium battery, or a cathode damaged or failed during the manufacturing process of the lithium secondary battery.

According to some embodiments, the cathode active material mixture may be obtained by pulverizing the cathode. The cathode active material mixture may be obtained in the form of powder.

The cathode active material mixture may refer to a raw material from which the cathode current collector is substantially removed.

In some embodiments, the cathode active material mixture may include some components derived from a material included in the manufacturing process of the cathode, such as a binder or a conductive material. In some embodiments, the cathode active material mixture may be substantially composed of a lithium-nickel metal oxide.

According to some embodiments, the cathode active material mixture may be subjected to heat treatment prior to the production of a lithium precursor through the cathode active material mixture to be described below.

The heat treatment may be performed at, for example, about 100 to 500°C, or about 350 to 450°C. Within the above range, decomposition and damage of the lithium-nickel metal oxide may be prevented while removing impurities included in the cathode active material mixture.

A lithium precursor may be produced by reducing the cathode active material mixture in a reactor according to operation S20. Through the reduction reaction, a lithium precursor, and a transition metal or transition metal oxide may be produced.

For example, the cathode active material mixture may be added into a fluidized bed reactor, and a reducing gas may be injected into the fluidized bed reactor to cause a reduction reaction.

The fluidized bed reactor may include a reactor that fluidizes the cathode active material mixture by passing a fluid (gas or liquid) through the injected cathode active material mixture.

In some embodiments, the reducing gas may contact the cathode active material mixture while being supplied from a lower portion of the reactor.

For example, the reducing gas may be hydrogen, a non-reactive gas, or a mixture thereof. The non-reactive gas may include helium (He), nitrogen (N₂), neon (Ne), argon (Ar), krypton (Kr), xenon (Xe) and the like.

In some embodiments, the reduction reaction may be a hydrogen reduction reaction or a carbon reduction reaction.

In some embodiments, the hydrogen reduction reaction may be performed at 400°C to 700°C, or 450°C to 550°C. In some embodiments, the carbon reduction reaction may be performed at 400°C to 800°C. Within the above reaction temperature range, the reduction reaction may be promoted while suppressing re-aggregation and recombination of the lithium precursor, the transition metal, and the transition metal oxide.

According to some embodiments, the lithium precursor produced through the reduction reaction may include one or more of lithium hydroxide, lithium oxide and lithium carbonate.

In some embodiments, the lithium precursor may be formed in the form of lithium hydroxide. A pH of the lithium precursor aqueous solution to be described below may be adjusted by the lithium hydroxide.

For example, the transition metal or transition metal oxide may include Ni, Co, NiO, CoO, MnO, etc.

A lithium precursor aqueous solution may be formed by dissolving the lithium precursor in water according to operation S30.

According to some embodiments, the lithium precursor may be subjected to water washing treatment, and the lithium precursor and water may come into contact through the water washing treatment to form a lithium precursor aqueous solution in which lithium hydroxide is dissolved in water.

According to some embodiments, the transition metal or transition metal oxide may be dispersed by the water washing treatment to be separated in a slurry state.

For example, the transition metal or transition metal oxide may not be dissolved in water through the water washing treatment to form a slurry in the dispersed state, and the slurry may be separated from the lithium precursor aqueous solution.

In some embodiments, the transition metal or transition metal oxide included in the slurry may react with an acid solution to form a transition metal precursor. For example, the transition metal precursor may include NiSO₄, MnSO₄ and CoSO₄, and the like.

According to some embodiments, the lithium precursor aqueous solution may include aluminum. For example, the aluminum may exist in an aluminum ion state through the water washing treatment.

For example, the aluminum may exist in various forms, such as Al₃⁺, Al(OH)²⁺, Al(OH)₂⁺, A1(OH)3, Al(OH)₄⁻, and the like., in the lithium precursor aqueous solution.

According to some embodiments, the lithium precursor aqueous solution may have a pH of 6 or more. According to some embodiments, the pH of the lithium precursor aqueous solution may be 7 or more, 7.5 or more, 8 or more, or 8.5 or more.

Depending on the pH of the lithium precursor aqueous solution, the aluminum ions which exist in the solution phase may have different forms, and accordingly, there may be a difference in an amount from which aluminum is removed.

For example, if the pH of the lithium precursor aqueous solution is 5 or less, a large quantity of aluminum may exist in the solution in the form of Al³⁺, and when the pH is 6, a large quantity of aluminum may exist in the solution in the form of Al(OH)²⁺, Al(OH)₂⁺ and Al(OH)₃. For example, if the pH of the lithium precursor aqueous solution is 7 or more, a large quantity of aluminum may exist in the solution in the form of Al(OH)₄⁻.

The aluminum existing in a large quantity may mean that a specific form of aluminum is 50 mol% or more based on the total number of moles of aluminum.

Within the pH range, aluminum included in the lithium precursor aqueous solution may be adsorbed onto the aluminum adsorption resin column in the form of Al(OH)₄⁻.

According to some embodiments, the lithium precursor aqueous solution may be basic. Accordingly, a large quantity of aluminum may be included in the solution in the form of Al(OH)₄⁻.

The lithium precursor aqueous solution may pass through an aluminum adsorption resin column 100 to adsorb aluminum included in the lithium precursor aqueous solution to the aluminum adsorption resin column 100 according to operation S40.

A first treatment liquid including distilled water may be injected into the aluminum adsorption resin column 100 at a flow rate in a predetermined range to desorb the aluminum from the aluminum adsorption resin column 100 according to operation S50. By desorbing the aluminum, a regenerated aluminum adsorption resin column may be obtained.

The aluminum adsorption resin column 100 may include a column filled with an aluminum adsorption resin. For example, the column may have a volume of 0.1 ml to 1,000 L, and the column may be filled with the aluminum adsorption resin so that the aluminum adsorption resin occupies a predetermined space.

The aluminum adsorption resin may include, for example, an ion exchange resin. For example, the aluminum adsorption resin may include a resin in the form of beads having a predetermined particle size.

According to some embodiments, the aluminum adsorption resin may be an chelating resin or an anion exchange resin.

For example, the aluminum adsorption resin may adsorb aluminum hydroxide in the form of Al(OH)₄⁻ included in the lithium precursor aqueous solution.

For example, when the aluminum adsorption resin is a cation exchange resin, aluminum hydroxide may not be adsorbed, such that aluminum cannot be removed, and lithium ions may be adsorbed, such that recycle of metal may not be possible.

According to some embodiments, the aluminum adsorption resin may include an amine group and a hydroxyl group.

According to some embodiments, the aluminum adsorption resin may include an amine group and two or more hydroxyl groups.

According to some embodiments, the aluminum adsorption resin may include an amine group and three or more hydroxyl groups.

According to some embodiments, the aluminum adsorption resin may include an amphoteric resin including an acidic group and a basic group.

For example, the aluminum adsorption resin may adsorb aluminum through the hydroxyl group. The aluminum adsorption resin including the two or more hydroxyl groups may stably adsorb aluminum in the lithium precursor aqueous solution.

According to some embodiments, the aluminum adsorption resin may include a methylglucosylamine group. For example, the aluminum adsorption resin may include AmberLite UP7530 from Dupont including the methylglucosylamine group.

For example, the aluminum adsorption resin may adsorb aluminum in a form including Formula 2 below.

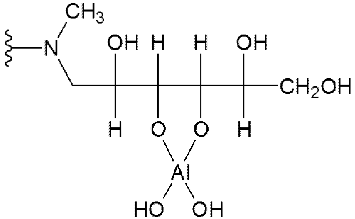

In Formula 2 above, a portion indicated by 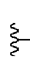 may be connected to a monomer portion of the aluminum adsorption resin. For example, the monomer includes a phenyl structure, and the portion indicated by 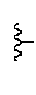 may be connected to a terminal portion from which one hydrogen is removed from the phenyl structure.

According to some embodiments, the aluminum adsorption resin column 100 may have a volume of 1.0 L to 350L.

According to some embodiments, a lithium precursor aqueous solution in a volume of 5 to 30 times the volume of the aluminum adsorption resin column 100 may be injected.

According to some embodiments, the lithium precursor aqueous solution may be injected until an excess amount of aluminum metal is produced. The excess amount of aluminum metal may mean aluminum metal generated by exceeding an aluminum adsorption capacity of the aluminum adsorption resin.

However, it is not necessary to inject the lithium precursor aqueous solution until an excess amount of aluminum metal is produced, and the lithium precursor aqueous solution may be injected only in a volume as needed.

As shown in FIG. 2, the lithium precursor aqueous solution may be injected into one surface of the aluminum adsorption resin column 100 through a lithium precursor aqueous solution injection conduit 101. The lithium precursor aqueous solution may be discharged through a composite conduit 104 connected to the other surface on a side opposite to the one surface into which the lithium precursor aqueous solution is injected. For example, the lithium precursor aqueous solution may flow in a single direction in the aluminum adsorption resin column 100.

A first treatment liquid including distilled water may be injected into the other surface of the aluminum adsorption resin column 100 through the composite conduit 104. The first treatment liquid may be injected into the aluminum adsorption resin column 100 with a flow rate controlled through a flow rate control unit 110. The first treatment liquid may desorb aluminum from the aluminum adsorption resin column 100 and be discharged through a treatment liquid discharge conduit 106 connected to the one surface on a side opposite to the other surface into which the first treatment liquid is injected. For example, the first treatment liquid may flow in a single direction in the aluminum adsorption resin column 100.

For example, the conduit connected to the aluminum adsorption resin column 100 may be fluidly connected to both the lithium precursor aqueous solution injection conduit 101 and the treatment liquid discharge conduit 106.

For example, the lithium precursor aqueous solution injection conduit 101 and the treatment liquid discharge conduit 106 connected to the aluminum adsorption resin column 100 may be divided by valves (for example, portions indicated by dotted lines in FIG. 2).

For example, the lithium precursor aqueous solution may be injected and discharged while a valve of the treatment liquid discharge conduit 106 is closed. Otherwise, the treatment liquid may be injected and discharged while a valve of the lithium precursor aqueous solution injection conduit 101 is closed.

According to some embodiments, the lithium precursor aqueous solution injection conduit 101 and a lithium precursor aqueous solution discharge conduit 105 (see the embodiment of FIG. 3), and a treatment liquid injection conduit 102 (see FIG. 3) and the treatment liquid discharge conduit 106 may be divided.

For example, the lithium precursor aqueous solution conduits 101 and 105 and the treatment liquid conduits 102 and 106 may be divided to separate liquids remaining in the conduits, and thus efficiencies of aluminum adsorption and desorption may be improved.

For example, the injection and discharge of the lithium precursor aqueous solution, and the injection and discharge of the first treatment liquid may be performed sequentially. For example, once the aluminum is sufficiently adsorbed onto the aluminum adsorption resin column 100 through the injection and discharge of the treatment liquid, the adsorbed aluminum may be sufficiently desorbed through the injection and discharge of the first treatment liquid.

According to some embodiments, a direction in which the lithium precursor aqueous solution flows and a direction in which the treatment liquid flows in the aluminum adsorption resin column 100 may be opposite to each other. For example, the lithium precursor aqueous solution may flow from the lithium precursor aqueous solution injection conduit 101 toward the composite conduit 104, and the treatment liquid may flow from the composite conduit 104 toward the treatment liquid discharge conduit 106.

The direction in which the lithium precursor aqueous solution flows and the direction in which the treatment liquid flows are opposite to each other, such that the system for recycling a metal from a lithium secondary battery may be efficiently implemented.

According to some embodiments, the first treatment liquid may include distilled water. For example, the first treatment liquid may include distilled water of 95% by weight ("wt%") or more, 98 wt% or more, or 99 wt% or more based on a total weight thereof.

Accordingly, a wastewater treatment process which is inevitably necessary when acids or bases are used may not be required. In addition, a decrease in the capacity of the aluminum adsorption resin column 100 due to the solution remaining in the aluminum adsorption resin column 100 may be prevented. Therefore, even if the lithium precursor aqueous solution and the treatment liquid are repeatedly injected into the aluminum adsorption resin column 100, metals may be efficiently recycled in terms of the energy and costs.

The flow rate control unit 110 may control the flow rate of the treatment liquid injected into the aluminum adsorption resin column 100.

For example, the flow rate control unit 110 may include a device for controlling the flow rate, such as a valve, a pump, a fan, a blower, etc., and may adjust an injection speed of the first treatment liquid injected into the aluminum adsorption resin column 100 through the device.

For example, the injection speed of the first treatment liquid may be controlled by adjusting a diameter, a length, etc. of the conduit connecting the flow rate control unit 110 and the aluminum adsorption resin column 100.

According to some embodiments, the first treatment liquid may be injected into the aluminum adsorption resin column 100 at a flow rate of 100 L/hr to 1,200 L/hr, 500 L/hr to 1,200 L/hr, or 1,000 L/hr to 1,200 L/hr.

According to some embodiments, the first treatment liquid may be injected into the aluminum adsorption resin column 100 at a linear velocity of 1 m/hr to 13 m/hr, 8 m/hr to 12.6 m/hr, or 10.4 m/hr to 12.48 m/hr.

According to some embodiments, a liquid hourly space velocity (LHSV) of the distilled water may be 1 or more and 10 or less, 1.5 or more and 9 or less, or 4 or more and 8 or less. Here, the LHSV may represent a flow rate of the first treatment liquid to a volume of the aluminum adsorption resin column 100.

For example, if the injection speed of the first treatment liquid exceeds the above range, aluminum from the aluminum adsorption resin may not be sufficiently desorbed, and thus the removal of aluminum in the lithium precursor aqueous solution which is reinjected may not be sufficiently achieved. In addition, damage may occur inside the aluminum adsorption resin column due to a physical force depending on the flow rate of the first treatment liquid, thereby causing a decrease in the regeneration efficiency of the aluminum adsorption resin.

For example, if the injection speed of the first treatment liquid is less than the above range, it may be difficult for the first treatment liquid to penetrate into the aluminum adsorption resin column, or aluminum may not be sufficiently desorbed from the aluminum adsorption resin due to a reversible reaction therewith. Thus, the removal of aluminum in the lithium precursor aqueous solution which is reinjected may not be sufficiently achieved.

According to some embodiments, an aluminum content in the first treatment liquid may be 15 ppm or less. According to some embodiments, the aluminum content in the distilled water which is injected into the aluminum adsorption resin column 100 before aluminum desorption may be 10 ppm or less.

According to some embodiments, the first treatment liquid may desorb aluminum from the aluminum adsorption resin column 100, thus, to produce a second treatment liquid including the desorbed aluminum.

According to some embodiments, the first treatment liquid may have a pH of 6.5 to 7.5, or 6.7 to 7.3.

Within the pH range, the aluminum adsorbed onto the aluminum adsorption resin column may be efficiently desorbed without additional chemical substances.

For example, when the first treatment liquid is acidic, a functional group of the aluminum adsorption resin may not be recovered, thereby decreasing a capacity retention rate of the aluminum adsorption resin, and making it impossible to repeatedly recycle metal from the lithium precursor.

For example, when the first treatment liquid is alkaline, the aluminum adsorbed onto the aluminum adsorption resin may be strongly bound to the aluminum adsorption resin in the form of Al(OFT)₄⁻, such that the aluminum desorption efficiency of the aluminum adsorption resin may be decreased. Accordingly, repeatedly recycling metals from the lithium precursor may be impossible.

According to some embodiments, the capacity retention rate of the aluminum adsorption resin column 100 by the first treatment liquid of the aluminum adsorption resin column 100 may be 70% or more, or 75% or more.

For example, the capacity retention rate may mean an exchange capacity after regeneration of the aluminum adsorption resin column by the first treatment liquid relative to an exchange capacity after regeneration of the aluminum adsorption resin column by a sulfuric acid aqueous solution and a sodium hydroxide aqueous solution.

According to some embodiments, the content of aluminum included in the second treatment liquid may be 200 ppm or more, or 210 ppm or more.

For example, if the content of aluminum included in the second treatment liquid is less than the above range, the aluminum desorption efficiency of the lithium precursor aqueous solution which is reinjected may be reduced.

As shown in FIGS. 2 and 3, the aluminum adsorption resin column 100 may be connected to an evaporation treatment unit 150 through a conduit 106. The evaporation treatment unit 150 may be connected to a discharge unit 155 from which aluminum is discharged. In addition, the evaporation treatment unit 150 may be connected to a distilled water regeneration unit 200 through a conduit. The distilled water regeneration unit 200 may be connected to a distilled water supply unit 120 connected to the flow rate control unit 110 through a conduit.

According to some embodiments, the second treatment liquid may be evaporated through the evaporation treatment unit 150 to produce a third treatment liquid containing no aluminum.

According to some embodiments, the evaporation treatment unit 150 may evaporate the distilled water included in the second treatment liquid. The evaporation method is not particularly limited, and for example, the distilled water may be evaporated by a method such as direct heating, indirect heating electricity, or microwave.

The aluminum may be removed through a predetermined distilled water fraction of the second treatment liquid, and the aluminum may be collected through evaporation of the second treatment liquid.

According to some embodiments, the distilled water fraction may be 0.01 wt% to 5 wt% based on a total weight of the distilled water included in the second treatment liquid.

For example, aluminum may be included in the distilled water fraction, and the distilled water fraction including aluminum may be flown into the discharge unit 155 to remove the aluminum.

The aluminum may be discharged in the discharge unit 155 through the distilled water fraction, and a third treatment liquid containing no impurities may be supplied to the distilled water regeneration unit 200. Accordingly, the purity of the water included in the third treatment liquid may be increased, and the third treatment liquid may be recycled as the first treatment liquid.

For example, when the distilled water fraction falls within the above range, the recycling efficiency of the treatment liquid through the third treatment liquid may be improved while sufficiently discharging the aluminum.

According to some embodiments, the third treatment liquid evaporated from the evaporation treatment unit 150 may be flown into the distilled water regeneration unit 200 in the form of water vapor. The flown third treatment liquid may be cooled in the distilled water regeneration unit 200 and recycled as distilled water.

According to some embodiments, the distilled water cooled in the distilled water regeneration unit 200 may be reinjected into the flow rate control unit 110 through the distilled water supply unit 120.

After removing aluminum from the aluminum adsorption resin column 100, the recycled treatment liquid may be reinjected into the aluminum adsorption resin column 100 without a separate chemical treatment or additional process, such that the aluminum adsorption resin column 100 may be efficiently regenerated.

According to some embodiments, the distilled water regeneration unit 200 may be maintained in a temperature range of 10°C to 40°C. The third treatment liquid flown first into the distilled water regeneration unit 200 within the above temperature range may be recycled as distilled water.

According to some embodiments, the distilled water regeneration unit 200 may be connected to the flow rate control unit 110 through the distilled water supply unit 120.

For example, the distilled water supply unit 120 may include a pump, a control valve, etc. The distilled water may be moved to the flow rate control unit 110 through the distilled water supply unit 120.

Since the treatment liquid may be reinjected into the aluminum adsorption resin column 100 from the distilled water regeneration unit 200 through the distilled water supply unit 120 via the flow rate control unit 110 in a state where impurities in the treatment liquid are removed, the above-described effects may be repeatedly achieved.

The embodiments of the present disclosure described above include the following aspects, and can be implemented through at least one of the following aspects.

According to the first aspect of a method for recycling metal from a lithium secondary battery, a cathode active material mixture containing lithium is prepared. A lithium precursor is produced by reducing the cathode active material mixture. A lithium precursor aqueous solution is formed by dissolving the lithium precursor in water. The lithium precursor aqueous solution passes through an aluminum adsorption resin column (100) to adsorb aluminum to the aluminum adsorption resin column (100). A first treatment liquid including distilled water into the aluminum adsorption resin column (100) is injected at a flow rate of 100 L/hr to 1,200 L/hr to obtain a regenerated aluminum adsorption resin column (100) from which aluminum is desorbed.

According to some embodiments, the lithium precursor may be obtained through a crystallization process of lithium hydroxide dissolved in the above-described aqueous lithium precursor solution from which aluminum is removed. For example, lithium may be recovered in the form of the lithium precursor substantially consisting of lithium hydroxide.

In the first aspect, according to the second aspect of the method for recycling metal from a lithium secondary battery, the regenerated aluminum adsorption resin column (100) is reused in the operation of adsorbing aluminum.

In the first or the second aspect, according to the third aspect of the method for recycling metal from a lithium secondary battery, a second treatment liquid including aluminum desorbed from the first treatment liquid is produced in the operation of obtaining a regenerated aluminum adsorption resin column (100).

In the third aspect, according to the fourth aspect of the method for recycling metal from a lithium secondary battery, a content of aluminum included in the second treatment liquid is 200 ppm or more.

In the third or the fourth aspect of the method for recycling metal from a lithium secondary battery, the method may further include producing a third treatment liquid formed by evaporating the second treatment liquid; and recycling the third treatment liquid as the first treatment liquid.

In the fifth aspect, according to the sixth aspect of the method for recycling metal from a lithium secondary battery, the operation of producing a third treatment liquid may include removing a predetermined distilled water fraction from the second treatment liquid together with the desorbed aluminum.

In anyone of the third aspect to sixth aspect, according to the seventh aspect of the method for recycling metal from a lithium secondary battery, According to exemplary embodiments, an amount of the distilled water fraction may be 0.01 wt% to 5 wt% based on a total weight of the distilled water included in the second treatment liquid.

In anyone of the first aspect to the seventh aspect, according to the eighth aspect of the method for recycling metal from a lithium secondary battery, the first treatment liquid may be injected at a flow rate of 1,000 L/hr to 1,200 L/hr.

In anyone of the first aspect to the eighth aspect, according to the ninth aspect of the method for recycling metal from a lithium secondary battery, the first treatment liquid may be injected at a linear speed of 8 m/hr to 13 m/hr.

In anyone of the first aspect to the ninth aspect, according to the tenth aspect of the method for recycling metal from a lithium secondary battery" the aluminum adsorption resin column (100) may include a resin including an amine group and a hydroxyl group.

In the tenth aspect, according to the eleventh aspect of the method for recycling metal from a lithium secondary battery, According to exemplary embodiments, the resin including an amine group and a hydroxyl group may include a methylglucosylamine group.

According to the twelfth aspect of the present disclosure, there is provided a system for recycling metal from a lithium secondary battery, the system including: an aluminum adsorption resin column (100); a flow rate control unit (110) configured to supply distilled water to the aluminum adsorption resin column (100); an evaporation treatment unit (150) configured to evaporate the distilled water passing through the aluminum adsorption resin column (100) to produce water vapor; a distilled water regeneration unit (200) configured to collect the distilled water from the water vapor generated from the evaporation treatment unit (150); and a distilled water supply unit (120) configured to supply the distilled water regenerated from the distilled water regeneration unit (200) to the flow rate control unit (110).

In the twelfth aspect, according to the thirteenth aspect of the system for recycling metal from a lithium secondary battery, the evaporation treatment unit (150) may include a discharge unit from which an untreated distilled water fraction into water vapor and aluminum are discharged.

In the twelfth or the thirteenth aspect, according to the fourteenth aspect of the system for recycling metal from a lithium secondary battery, flow rate control unit (110) may be configured to inject a first treatment liquid including distilled water into the aluminum adsorption resin column (100) at a flow rate of 100 L/hr to 1200 L/hr or 1000 L/hr to 1200 L/hr at a linear speed of 8 m/hr to 13 m/hr.

According to the fifteenth aspect of the present disclosure, there is provided a use of a system according to anyone of the twelfth aspect to the fourteenth aspect of the system for recycling metal from a lithium secondary battery according to a method as defined by anyone of the first aspect to eleventh aspect.

Hereinafter, specific experimental examples are proposed to facilitate understanding of the embodiments of the present disclosure.

### Example 1

A 1 kg cathode material separated from a waste lithium secondary battery was subjected to heat treatment at 450°C for 1 hour. The cathode material subjected to heat treatment was cut into small units and pulverized through milling to obtain a sample of Li-Ni-Co-Mn oxide cathode active material mixture.

0.2 kg of the obtained sample of cathode active material mixture was added into a fluidized bed reactor, and a mixed gas (reducing gas) of 20 vol% hydrogen/80 vol% nitrogen was injected through a gas inlet located at a lower portion of the fluidized bed reactor for 4 hours to fluidize the sample in the fluidized bed reactor, and caused a reaction with hydrogen gas to form a lithium precursor including lithium hydroxide. At this time, an internal temperature of the fluidized bed reactor was maintained at 460°C.

Water and nitrogen gas were added to the lithium precursor collected from an outlet of the reactor to form and collect a preliminary precursor mixture in a slurry state. Water was additionally added to the collected preliminary precursor mixture of the slurry state, followed by performing water washing treatment to obtain a lithium precursor aqueous solution.

The lithium precursor aqueous solution was passed through a 180 L aluminum adsorption resin column (chamber) including 125 L of aluminum adsorption resin (AmberLite UP7530 from Dupont). The lithium precursor aqueous solution was passed through the aluminum adsorption resin column to adsorb aluminum thereto.

Thereafter, a treatment liquid was introduced into the aluminum adsorption resin column at a flow rate of 1,000 L/hr for 70 minutes to desorb the aluminum adsorbed onto the aluminum adsorption resin column.

### Example 2

The adsorbed aluminum was desorbed in the same manner as in Example 1, except that distilled water was introduced into the aluminum adsorption resin column at a flow rate of 1,200 L/hr for 60 minutes, in order to maintain the same amount of distilled water introduced into the aluminum adsorption resin column.

### Example 3

The adsorbed aluminum was desorbed in the same manner as in Example 1, except that distilled water was introduced into the aluminum adsorption resin column at a flow rate of 200 L/hr for 350 minutes, in order to maintain the same amount of distilled water introduced into the aluminum adsorption resin column.

### Example 4

The adsorbed aluminum was desorbed in the same manner as in Example 1, except that distilled water was introduced into the aluminum adsorption resin column at a flow rate of 500 L/hr for 140 minutes, in order to maintain the same amount of distilled water introduced into the aluminum adsorption resin column.

### Comparative Example 1

The adsorbed aluminum was desorbed in the same manner as in Example 1, except that distilled water was introduced into the aluminum adsorption resin column at a flow rate of 1,500 L/hr for 47 minutes, in order to maintain the same amount of distilled water introduced into the aluminum adsorption resin column.

### Comparative Example 2

The adsorbed aluminum was desorbed in the same manner as in Example 1, except that a sulfuric acid aqueous solution was introduced into the aluminum adsorption resin column at a flow rate of 1,000 L/hr for 70 minutes.

### Comparative Example 3

The adsorbed aluminum was desorbed in the same manner as in Example 1, except that a sodium hydroxide aqueous solution was introduced into the aluminum adsorption resin column at a flow rate of 1,000 L/hr for 70 minutes.

### Comparative Example 4

The adsorbed aluminum was desorbed in the same manner as in Example 1, except that distilled water, sulfuric acid aqueous solution, distilled water, sodium hydroxide aqueous solution, and distilled water were introduced into the aluminum adsorption resin column in this order for a total of 70 minutes at a flow rate of 1,000 L/hr.

### Experimental Example 1. Evaluation of aluminum adsorption resin column regeneration (1)

The aluminum adsorbed onto the aluminum adsorption resin column according to Example 1 was desorbed therefrom, and the aluminum adsorption resin column was regenerated, then the aluminum concentration in the distilled water over time was analyzed. Analysis results are shown in Table 1 below.

**TABLE 1**

| **Item** | **Elapsed time** | | | | |
|---|---|---|---|---|---|
| | **10 minutes** | **20 minutes** | **30 minutes later** | **60 minutes later** | **70 minutes later** |
| Al concentration in treatment solution (PPM) | 43 | 230 | 230 | 230 | 3 |

As shown in Table 1 above, since aluminum ions in the distilled water were increased until 20 minutes, and the aluminum in the treatment liquid was maintained at a constant level from 20 minutes, it was confirmed that the aluminum adsorbed onto the aluminum adsorption resin column was desorbed. In addition, since the aluminum concentration in the treatment liquid was hardly detected after 70 minutes, it was confirmed that the regeneration of the aluminum adsorption resin column was completed.

### Experimental Example 2. Evaluation of aluminum adsorption resin column regeneration (2)

After desorbing the aluminum adsorbed onto the aluminum adsorption resin column according to the examples and comparative examples, the aluminum concentration in the solution after each treatment was confirmed.

In addition, aluminum adsorption and desorption of the aluminum adsorption resin column using a lithium precursor aqueous solution having an aluminum concentration of 40 ppm were performed, then an exchange capacity (eq/L) of the aluminum adsorption resin column was evaluated. The capacity retention rate (%) was evaluated by comparing the respective exchange capacities according to the examples and comparative examples based on the exchange capacity according to Comparative Example 4 in which aluminum was desorbed using a sulfuric acid aqueous solution, distilled water, and a sodium hydroxide aqueous solution.

Evaluation results are shown in Table 2 below.

**TABLE2**

| **Item** | | **Example 1** | **Example 2** | **Example3** | **Example 4** | **Comp. example 1** | **Comp. example 4** |
|---|---|---|---|---|---|---|---|
| Flo w rate | Flow rate (L/hr) | 1,000 | 1,200 | 200 | 500 | 1,500 | 1,000 |
| | Line seed (m/hr) | 10.40 | 12.48 | 2.08 | 5.2 | 15.60 | 10.40 |
| Distilled water usage (L) | | 1,170 | 1,170 | 1,170 | 1,170 | 1,170 | 1300 |
| Sodium hydroxide usage (L) | | 0 | 0 | 0 | 0 | 0 | 30 |
| Sulfuric acid usage (L) | | 0 | 0 | 0 | 0 | 0 | 170 |
| Exchange capacity of aluminum adsorption resin column after regeneration (eq/L) | | 1.45 | 1.35 | 0.34 | 1.20 | 0.55 | 1.70 |
| Capacity retention rate (%) | | 84 | 78 | 20 | 69 | 32 | 99 |

Referring to Table 2 above, when the aluminum adsorption resin column was regenerated at a flow rate of distilled water of 1000 L/hr or 1200 L/hr according to Examples 1 and 2, it was confirmed that the exchange capacity of the aluminum adsorption resin column was high, such that metal could be repeatedly recycled from the lithium secondary battery. In addition, the capacity retention rate was shown 75% or more, it was confirmed that the aluminum desorption efficiency was high.

When the aluminum adsorption resin column was regenerated at a flow rate of distilled water of 200 L/hr or 500 L/hr according to Examples 3 and 4, the concentration of aluminum included in the solution after treatment was 100 ppm or more. However, since the linear velocity was insufficient, distilled water did not sufficiently penetrate between the aluminum adsorption resin columns, and metal ions being attached to the functional group remained, such that the exchange capacity of the aluminum adsorption resin was decreased compared to Examples 1 and 2, and the capacity retention rate was shown less than 75%.

When the aluminum adsorption resin was regenerated at a flow rate of 1,500 L/hr of distilled water according to Comparative Example 1, the concentration of aluminum included in the solution after treatment was decreased due to the flow rate, and the exchange capacity and capacity retention rate were significantly decreased due to insufficient desorption time caused by the high flow rate.

According to Comparative Example 4, when the aluminum adsorption resin was regenerated using both the sulfuric acid aqueous solution and the sodium hydroxide aqueous solution, aluminum in the aluminum adsorption resin was desorbed through the sulfuric acid aqueous solution, and the functional group of the aluminum adsorption resin was regenerated through the sodium hydroxide aqueous solution, such that the measured exchange capacity and capacity retention rate were high. However, wastewater in sulfate ions, ammonium ions, etc. was generated due to the use of sulfuric acid aqueous solution and sodium hydroxide aqueous solution, and thus, the reuse of each aqueous solution and distilled water was impossible. In addition, since additional water washing was required between the introduction of sulfuric acid aqueous solution and the introduction of sodium hydroxide aqueous solution, the total amount of wastewater was also increased.

According to Comparative Example 2, when only a sulfuric acid aqueous solution was introduced, aluminum desorption from the aluminum adsorption resin column was possible, but the functional group of the adsorption resin was not recovered, such that the metal could not be repeatedly recycled from the lithium precursor aqueous solution.

According to Comparative Example 3, when only a sodium hydroxide aqueous solution was introduced, aluminum in the aluminum adsorption resin column was not desorbed depending on the pH.

Although the scope of the present disclosure has been described in accordance with specific embodiments it should be noted that the scope of the present disclosure is not limited to these embodiments only. Many other embodiments and variations thereof may be envisioned by the skilled person without departing from the scope of the present disclosure.

### Description of Reference Numerals

100: Aluminum adsorption resin column
110: Flow rate control unit
120: Distilled water supply unit
150: Evaporation treatment unit
155: Discharge unit
200: Distilled water regeneration unit

## Claims

1. A method for recycling a metal from a lithium secondary battery, the method comprising:
preparing a cathode active material mixture containing lithium;
producing a lithium precursor by reducing the cathode active material mixture;
forming a lithium precursor aqueous solution by dissolving the lithium precursor in water,
passing the lithium precursor aqueous solution through an aluminum adsorption resin column (100) to adsorb aluminum to the aluminum adsorption resin column (100); and
injecting a first treatment liquid including distilled water into the aluminum adsorption resin column (100) at a flow rate of 100 L/hr to 1,200 L/hr to obtain a regenerated aluminum adsorption resin column (100) from which aluminum is desorbed.

2. The method according to claim 1, wherein the regenerated aluminum adsorption resin column (100) is reused in the operation of adsorbing aluminum.

3. The method according to claim 1 or 2, wherein in the operation of obtaining a regenerated aluminum adsorption resin column (100), a second treatment liquid including aluminum desorbed from the first treatment liquid is produced.

4. The method according to claim 3, wherein a content of aluminum included in the second treatment liquid is 200 ppm or more.

5. The method according to claim 3 or 4, further comprising:
producing a third treatment liquid formed by evaporating the second treatment liquid; and
recycling the third treatment liquid as the first treatment liquid.

6. The method according to claim 5, wherein the operation of producing a third treatment liquid comprises removing a predetermined distilled water fraction from the second treatment liquid together with the desorbed aluminum.

7. The method according to anyone of claims 3 to 6, wherein an amount of the distilled water fraction is 0.01 wt% to 5 wt% based on a total weight of the distilled water included in the second treatment liquid.

8. The method according to anyone of claims 1 to 7, wherein the first treatment liquid is injected at a flow rate of 1,000 L/hr to 1,200 L/hr.

9. The method according to anyone of claims 1 to 8, wherein the first treatment liquid is injected at a linear speed of 8 m/hr to 13 m/hr.

10. The method according to anyone of claims 1 to 9, wherein the aluminum adsorption resin column (100) comprises a resin including an amine group and a hydroxyl group.

11. The method according to claim 10, wherein the resin including an amine group and a hydroxyl group includes a methylglucosylamine group.

12. A system for recycling a metal from a lithium secondary battery, the system comprising:
an aluminum adsorption resin column (100);
a flow rate control unit (110) configured to supply distilled water to the aluminum adsorption resin column (100);
an evaporation treatment unit (150) configured to evaporate the distilled water passing through the aluminum adsorption resin column (100) to produce water vapor;
a distilled water regeneration unit (200) configured to collect the distilled water from the water vapor generated from the evaporation treatment unit (150); and
a distilled water supply unit (120) configured to supply the distilled water regenerated from the distilled water regeneration unit (200) to the flow rate control unit (110).

13. The system according to claim 12, wherein the evaporation treatment unit comprises a discharge unit (150) from which an untreated distilled water fraction into water vapor and aluminum are discharged.

14. The system according to claim 12 or 13, wherein said flow rate control unit (110) is configured to inject a first treatment liquid including distilled water into the aluminum adsorption resin column (100) at a flow rate of 100 L/hr to 1200 L/hr or 1000 L/hr to 1200 L/hr at a linear speed of 8 m/hr to 13 m/hr.

15. Use of a system according to anyone of claims 12 to 14 for recycling metal from a lithium secondary battery according to a method as defined by anyone of claims 1 to 11.
